# EUROPEAN PATENT APPLICATION

(11) **EP 4 707 090 A1**
(43) Date of publication of application: **11.03.2026**
(21) Application number: 24199372.4
(22) Date of filing: 10.09.2024
(51) Int. Cl.: B60T 13/68, B60T 13/66, B60T 17/18

(54) **REDUNDANT BRAKE SYSTEM CONTROLLED BY AN AXLE MODULE**

(71) Applicant: KB Intellectual Property GmbH & Co. KG, 82049 Pullach (DE)
(72) Inventor: GYURKO, Zoltán, 1047 Budapest (HU); NEMETH, Huba, 1116 Budapest (HU); ADLER, Tamas, 2030 Erd (HU); MOLNAR, Peter, 1046 Budapest (HU); THOMEN, Matthias, 70182 Stuttgart (DE); FARKAS, Peter, 3525 Miskolc (HU)

(57) **Abstract**

A brake system for a commercial vehicle, wherein the commercial vehicle comprises at least one front axle (F) and at least one rear axle (R), comprises a redundant electro-pneumatic service brake system and an electro-pneumatic parking brake system, wherein at least one axle (F, R) of the vehicle is equipped with an electro-pneumatic device (9, 10) which comprises redundant electric and/or electronic devices which are configured to control two independent electro-pneumatic circuits. At least one axle (F, R) of the vehicle is equipped with a 2-channel electro-pneumatic device (9, 10) having redundant electric/electronic devices, which is configured to control two independent pneumatic circuits, wherein one circuit is configured to control one or more service brake actuators (12, 13) which are associated with at least one axle (F, R), and wherein the other pneumatic circuit is configured to control one or more parking brake actuators (12, 13) which are associated with at least one axle (F, R). The 2-channel electro-pneumatic device comprises a redundant axle module (9, 10) which comprises a 1-channel electro-pneumatic modulator (EPM) and a 1-channel electronic parking brake module (EPB) forming an integrated redundant electronic service brake control unit and an integrated electronic parking brake control unit.

## Description

The invention relates to a brake system for a commercial vehicle comprising a redundant electro-pneumatic service brake system and an electro-pneumatic parking brake system.

The autonomous operation of transport vehicles is a new field of innovations. More sophisticated functions require special hardware infrastructure. Until present day, commercial vehicle systems require the presence and attention of the driver. However, in the future, the driver will be less involved into the driving control task of the vehicle. Therefore, automated systems are going to take over more significant driving functions, which requires increased reliability levels and consequently different types of system redundancies. Moreover, from a certain share of total production onwards, such vehicles will either be designed without a cab at all or only with an emergency cab for cost reasons. Accordingly, the driver interface - i.e., the brake pedal - can either be simplified, e.g., without pneumatics, or even eliminated altogether.

This technical situation encompasses the problem that commercial vehicles nowadays use electro-pneumatic or by-wire brake systems where the electronic part of the control is realised as a single circuit control. In case of malfunction of the control electronics the driver can control the pneumatic part of the brake system by his/her foot because a two-circuit pneumatic backup system is still available.

In case of highly automated vehicles where the driver is not anymore in the control loop, or even not available or present in the vehicle, the above brake system would be unsatisfactory since there is no means which would substitute the brake control of the driver in case of malfunction of the single electronic control circuit. Therefore, some redundancy must be added to the control of the brake system.

Publication DE102008009043 B3 shows a redundant brake system for a commercial vehicle. The system utilizes the parking brake integrated into an air supply unit as a redundant brake actuator. For axles not equipped with spring parking brake chambers, the control output of the trailer control module is used as pneumatic control input of the axle modulators.

Publication EP 3626558 B1 describes pneumatic booster valves which can control the backup ports of the axle modulators and optionally the non-inverted input of the trailer control module. These booster valves can be controlled by a dedicated brake control ECU or by the electronic parking brake unit, which can accept electric brake demands and, in this way, pneumatics can be eliminated from the cabin.

Publication EP 3626559 A1 is about a redundant electro-pneumatic brake system, where the axle pressure modulators are equipped with redundant digital communication line towards a secondary brake control ECU. Moreover, these axle modulators do have redundant electric supply. This solution enables to control of the redundant circuit electrically, so pneumatics can be eliminated from the cabin, and the redundant brake system can provide full ESP functionality as well.

Publication EP 3415386 A1 describes a redundant electro-pneumatic brake system, where the electronic parking brake system acts as redundant brake by controlling the spring brake chambers on the rear axle, and by utilizing an inverting relay, the backup port of the front axle modulator can be controlled by the EPB (Electronic Parking Brake) system as well.

Publication EP 3626557 B1 describes a redundant electro-pneumatic brake system, where the electronic parking brake system acts as redundant brake by controlling the spring brake chambers on the rear axle, and by utilizing an non-integrated electro-pneumatic booster valve, the backup port of the front axle modulator can be controlled by the EPB system as well.

Publication EP 3626557 B1 also describes a multiple redundant brake system, which is a combination of the redundant pressure modulators and a redundant electronic parking brake system. In this way, there are three independent electro pneumatic brake systems available on the vehicle which can accept electric brake demands. That enables on the one hand the elimination of pneumatics from the cabin, on the other hand, the vehicle can continue driving in autonomous mode in case of a single failure of the brake system.

Publication EP 2794368 A1 shows a redundant brake system for a commercial vehicle. The system utilizes the parking brake integrated into an air supply unit as a redundant brake actuator. For axles not equipped with spring parking brake chambers the air supply unit includes an additional electro-pneumatic modulator to generate control pressure for the pneumatic control input of the axle modulators.

Publication EP 2229302 A1 shows a redundant brake system for a commercial vehicle. The system utilizes pneumatic brake system as primary and an electro-mechanical system as redundant brake system. All axles are equipped with both types of brake actuators.

Publication EP 3938255 A1 describes a redundant brake system, where the electronic parking brake can drive the front axle modulator's backup port by using an inverting relay valve. Moreover, using a select high valve at the backup port, either the inverting relay, or the brake pedal's pneumatic backup circuit can control the backup port of the front axle modulator, so there is still pneumatics in the cabin.

Publication EP 3749558 A1 discloses an electro-pneumatic redundant brake system, which uses wheel modulators having redundant pneumatic supply. To ensure circuit separation, another service brake circuit is introduced separated by a protection valve, and this circuit can act as redundant pneumatic supply for the electro-pneumatic wheel modules.

Publication EP 4116161 A1 is about a redundant brake system, which utilizes the electronic parking brake system as redundant brake system. The EPB module - which can be integrated into the air treatment unit - consists of a valve arrangement having two inverting and two non-inverting outputs to control the front and rear service brake modulator's backup ports, the front and rear parking brake actuators, and the trailer control module independently as well to implement a redundant electro-pneumatic brake system. The EPB module (and the primary brake control ECU) can receive brake demands directly from the foot brake module or from both autonomous driving ECUs.

Publication EP 3452346 A1 describes a redundant brake system, where the electronic parking brake can drive the rear axle parking brake chambers as a redundant brake circuit. Moreover, using a pneumatic booster valve the backup port of the front axle modulator can be controlled. By adding a bypass valve to this line either the foot brake module's pneumatic outlet port or the pneumatic outlet port of the booster can be connected to the backup port of the front axle modulator. But still, in this way pneumatics is still present in the cabin.

Publication EP 3600992 A1 describes a redundant brake system, where the electronic parking brake can drive the front axle modulator's backup port by using the trailer control module's pneumatic control outlet (yellow line). Moreover, using a select high valve at the backup port, either the inverting relay, or the brake pedal's pneumatic backup circuit can control the backup port of the front axle modulator, so there is still pneumatics in the cabin.

Publication EP 3600994 A1 describes a redundant brake system, where the electronic parking brake is integrated into the trailer control module to implement the redundant electro-pneumatic brake system for a CV.

Publication EP 3787942 A1 discloses a redundant electro pneumatic brake system, where the front and rear axle pressure modulators are having redundant pneumatic supply. Therefore, a third independent service brake pneumatic circuit must be introduced to ensure circuit separation. The redundant axle modules can accept brake demands directly from both autonomous driving ECUs and optionally from a dedicated brake control ECU. The parking module, which can be integrated into the air treatment unit forms the redundant pair of the primary brake circuit. The EPB module does have an inverted output to control the spring brake actuators, and a non-inverting pneumatic outlet port to optionally control the axle pressure modulator's backup port. The axle modules can control service brake actuators only. Parking brake actuators being controlled by independent EPB module.

Publication EP 4001031 A1 describes a brake system, where the electronic parking brake as a redundant brake system equipped with dedicated yaw-rate, acceleration, and wheel-speed sensors to provide full ESP functionality by the redundant system as well. The parking brake module can control the front and rear spring brake actuators independently.

Publication EP 3787943 A1 describes a redundant electro pneumatic brake system, where all brake actuators are controlled by a wheel pressure modulator having redundant pneumatic supply. Therefore, a third independent service brake pneumatic circuit must be introduced to ensure circuit separation. All the wheel pressure modulators can receive brake demands from both autonomous driving ECUs, but the wheel modules can control service brake actuators only. Parking brake actuators being controlled by dedicated EPB module.

It is an object of the present invention to overcome the above discussed problems that are present in the prior art and to provide a respectively improved brake system having suitable redundancy to reliably control the brake system of a commercial vehicle.

According to the present invention, this aim is achieved by a brake system for a commercial vehicle as defined by claim 1. Advantageous embodiments of the invention are defined by the dependent claims 2 to 15.

Accordingly, a brake system for a commercial vehicle, wherein the commercial vehicle comprises at least one front axle and at least one rear axle, comprises a redundant electro-pneumatic service brake system and an electro-pneumatic parking brake system, wherein at least one axle of the vehicle is equipped with an electro-pneumatic device which comprises redundant electric and/or electronic devices which are configured to control two independent electro-pneumatic circuits.

This brake system is preferably characterized in that at least one axle of the vehicle is equipped with a 2-channel electro-pneumatic device having redundant electric and/or electronic devices, which is configured to control two independent pneumatic circuits, wherein one of the two pneumatic circuits is configured to control one or more service brake actuators which are associated with at least one axle of the vehicle, and wherein the other of the two pneumatic circuits is configured to control one or more parking brake actuators which are associated with at least one axle of the vehicle.

This brake system is preferably further configured such that the redundant electric and/or electronic devices of the 2-channel electro-pneumatic device include at least two independent electric power supplies. Furthermore, the redundant electric and/or electronic devices of the 2-channel electro-pneumatic device can include an electric controller device which is configured to receive electrical control demand signals as service brake demands and/or as parking brake demands.

In a preferred embodiment of the invention, the brake system is characterized in that the 2-channel electro-pneumatic device comprises a redundant axle module which comprises a 1-channel electro-pneumatic modulator (EPM) and a 1-channel electronic parking brake module (EPB) forming an integrated redundant electronic service brake control unit and an integrated electronic parking brake control unit.

Accordingly, the present invention preferably discloses a brake system for a commercial vehicle where instead of an electric pressure modulator (EPM) at least one redundant axle module is provided which is applied at least on one axle of the vehicle. The redundant axle module comprises a 1-channel electro-pneumatic (electric pressure) modulator (EPM) and a 1-channel electronic parking brake module (EPB). Thereby, an integrated redundant electronic service brake control unit and an integrated electronic parking brake control unit (ECU) is formed. The redundant axle module is configured to control service brake and parking brake actuators which are associated with at least one axle of the vehicle.

Each redundant axle module is a standalone component. It only needs to be configured depending on which kind of axle of the vehicle it is fitted to (e.g., front vs. rear axles, steered vs. non-steered axles).

The integration of the electronic service brake control unit and the electronic parking brake control unit provides the advantage that no dedicated electronic brake control unit (ECU) is needed. This helps to reduce system complexity and costs. Later-on, this unit can also be connected to a central/domain ECU, if needed. Also, there is no need for a dedicated parking brake module (neither standalone, nor GSAT integrated), which helps to reduce the complexity of the air treatment unit and reduces the number of brake system components.

The redundant axle module can be fitted to any axle of a commercial vehicle; therefore, any kind of commercial vehicle configuration is supported without limitation.

According to a further embodiment of the invention, the brake system is configured such that at least one axle of the vehicle is equipped with a redundant axle module and the other axle(s) of the vehicle are equipped with non-redundant axle module(s). Herein, if at least one axle of the vehicle is equipped with a redundant axle module, at least one other axle of the vehicle can be equipped with a 1-channel electro-pneumatic modulator (EPM). Furthermore, pressure control valves can be arranged sidewise for every single brake actuator on the axle which is equipped with the 1-channel pressure modulator (EPM).

According to a further preferred embodiment of the invention, the brake system is characterized in that at least one axle of the vehicle is equipped with a 2-channel electro-pneumatic device having non-redundant electric and/or electronic devices, which is configured to control two independent pneumatic circuits, wherein one of the two pneumatic circuits is configured to control one or more service brake actuators which are associated with at least one axle of the vehicle, and wherein the other of the two pneumatic circuit is configured to control one or more parking brake actuators which are associated with at least one axle of the vehicle.

Herein, the brake system may be configured such that the electronic parking brake control is assigned in a purely electric manner to the axle modules. By this embodiment it may be possible that the axle module can accept only "electrical signals" as electrical brake demands from a sensor, for example a hand control unit (HCU) or from any external electrical device (ECU, etc). Accordingly, it does have an electrical interface only, and there is no interface for a pneumatic brake demand input, i.e. the connection between the axle module and the "brake demand source" can be electrical only.

Furthermore, a pressure control valve can be arranged sidewise to at least one service brake actuator.

The brake system according to the invention may further be configured such that, if 2-channel electro-pneumatic devices, particularly redundant axle modules, respectively are arranged on multiple axles of the vehicle and respectively have independent electric power supplies, the parking brake system also has further independent power supply circuits. Herein, for the multi-channel parking brake system the input brake demand signal may be generated redundantly as well.

As can be taken from the preceding embodiments of the invention, a steer-by-brake functionality is supported by the redundant axle module. Moreover, adding two more pressure control modules (PCVs) to the spring/parking brake actuators/chambers on all steered axles enables an integration of a steer-by-brake functionality into the electronic parking brake module as well.

According to a further embodiment of the invention, the brake system may be configured such that the electronic pressure modulators fitted to opposite axles to axle modules the pneumatically separated service brake circuits (front, rear) are equipped with electrically independent power supplies. By this embodiment it may be possible that, if only one axle of a vehicle is equipped with an axle module and the other axle is equipped with a conventional pressure modulator (EPM), the axle module and the conventional pressure modulator cannot be connected to the same power supply circuit, i.e. they must remain "electrically independent". Accordingly, the axle modules and the pressure modulators mounted on different axles shall have independent electrical power supplies (power sources) also.

According to still a further embodiment of the invention, the brake system may be configured such that the brake control of the brake circuits which are not equipped with a redundant axle modulator is integrated into an air treatment unit.

Further to the above disclosed embodiments of the invention, a multiple redundancy can be established due to the so-called pneumatic control room link (which is shown in the attached drawings). Herein, control rooms of the pressure modulators on the different axles of the vehicle can be connected to each other using a pneumatic backup port. This enables to control a malfunctioning pressure modulator's relay valve by another redundant axle module. Since every module typically consists of backup solenoid valves, a circuit separation is ensured. This connection can also be implemented for the parking brake modules.

Further details and advantages of the invention will be explained in the following detailed description of various embodiments of the invention in combination with the attached drawings.
Fig. 1 shows a first embodiment of a brake system for a two-axle commercial vehicle according to the invention.
Fig. 2 shows another embodiment of a brake system for a two-axle commercial vehicle according to the invention.
Fig. 3 shows yet another embodiment of a brake system for a two-axle commercial vehicle according to the invention.
Fig. 4 shows yet another embodiment of a brake system for a two-axle commercial vehicle according to the invention.
Fig. 5 shows yet another embodiment of a brake system for a two-axle commercial vehicle according to the invention.
Fig. 6 shows yet another embodiment of a brake system for a two-axle commercial vehicle according to the invention.

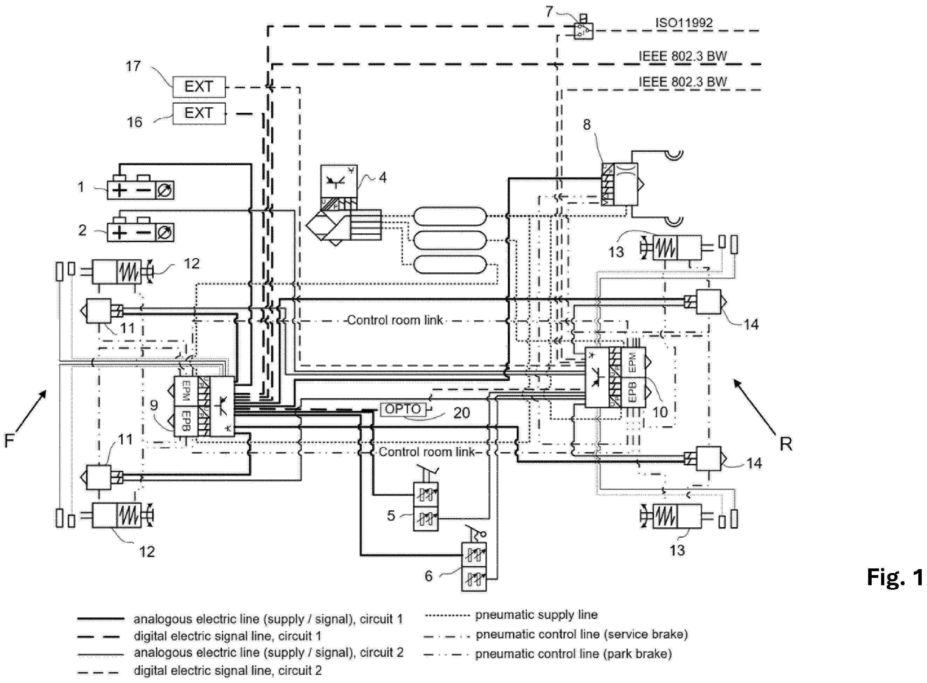

A brake system architecture of a commercial vehicle is shown in Fig. 1. As schematically shown, the vehicle comprises a front axle F and a rear axle R. It will be appreciated that any other number of front and/or rear axles can be provided in the vehicle. The brake system comprises a redundant electro-pneumatic service brake system and an electro-pneumatic parking brake system essentially comprising a redundant axle module 9 which is applied on or associated with the front axle F and a redundant axle module 10 which is applied on or associated with the rear axle R. Each redundant axle module 9, 10 comprises a 1-channel electro-pneumatic modulator EPM and a 1-channel electronic parking brake module EPB, thereby forming an integrated redundant electronic service brake control unit and an integrated electronic parking brake control unit.

Two service brake and parking brake actuators 12 are associated with the front axle F, and two service brake and parking brake actuators 13 are associated with the rear axle R. Herein, respectively one of the actuators 12, 13 is associated with the front or rear wheels of the vehicle on the left-hand side, and respectively one of the actuators 12, 13 is associated with the front or rear wheels of the vehicle on the right-hand side. The two service brake and parking brake actuators 12 in the front are pneumatically controlled by the redundant axle module 9, and the two service brake and parking brake actuators 13 in the rear are pneumatically controlled by the redundant axle module 10.

Furthermore, two pressure control modules or valves (PCVs) 11 are associated with the front axle F, wherein respectively one pressure control valve 11 is associated with and controls respectively one of the two service brake and parking brake actuators 12, particularly the service brake portion thereof. Likewise, two pressure control modules or valves (PCVs) 14 are associated with the rear axle R, wherein respectively one pressure control valve 14 is associated with and controls respectively one of the two service brake and parking brake actuators 13, particularly the service brake portion thereof.

The brake system furthermore comprises a first electric power supply device 1 for the redundant axle module 9, i.e. the first brake circuit, and a second electric power supply device 2 for the redundant axle module 10, i.e. the second brake circuit. Both the redundant axle module 9 and the redundant axle module 10 are furthermore electrically connected with each of the two pressure control valves 11, 14.

As shown in Fig. 1, the brake system may furthermore comprise a foot brake sensor (FBS) 5 and a hand control unit (HCU) 6 for the parking brake, both being electrically connected with the two redundant axle modules 9 and 10 (first and second (electric/electronic) brake circuits). The brake system may furthermore comprise a trailer control module 8 which is electrically and pneumatically controlled as shown in the drawings.

The attached drawings (Figs. 1 to 6) schematically show in various types of drawing lines (solid lines, broken lines, dotted lines, chain dotted lines, etc.) the various kinds of electric and pneumatic lines that are provided to accomplish the functions of and connections in the brake system (e.g. analogous electric supply and signal lines and digital electric signal lines, each both for the first, second and third (electric/electronic) brake circuits, as well as pneumatic supply lines and pneumatic control lines, both for the service brake and the park brake). Thus, additional features and functions of the brake system, which are not explicitly discussed in this specification, but which are part of the present disclosure, become evident from the drawings.

As mentioned above, in the case of an intact system, the front redundant axle module 9 can control the two front service brake and parking brake actuators 12. If it is configured as a master unit, the front redundant axle module 9 can also control other redundant axle modules fitted to other axles of the vehicle (e.g. rear redundant axle module 10). This may be accomplished by using a digital communication interface (e.g. CAN / LIN / Ethernet) via a galvanically separated communication line 20. Moreover, wheel speed sensor signals can be transmitted by any redundant axle module 9, 10 to another redundant axle module 9, 10 using the same communication line 20.

For instance, on a 4x2 vehicle, the rear redundant axle module 10 is configured as a slave unit. Furthermore, it also has an independent electrical supply 2, since in case of a failure of the primary brake circuit, one of the slave units can take over the role of the master unit (see Fig 1).

As shown in Fig. 1, both redundant axle modules 9, 10 can control all the pressure control valves 11, 14 on both axles F, R to ensure a stabilization function. Thereby, for example, the full functionality of an Electronic Stability Program (ESP) or an Electronic Stability Control (ESC) can be accomplished in case of a single failure of the respective other redundant axle module 9, 10.

Furthermore, both redundant axle modules 9, 10 can also communicate (7) with a trailer that is attached to the commercial vehicle via trailer CAN communication protocol (ISO 11992) or trailer ethernet communication interface.

Furthermore, both redundant axle modules 9, 10 can receive electrical brake demands only which can be generated by other electric or electronic components 16, 17, e.g., components for Highly Automated/Autonomous Driving (HAD ECU) or optionally a foot brake sensor (FBS) 5 and/or a hand control unit (HCU) 6 for the parking brake, to fulfill the brake demands generated by the driver of the vehicle or brake demands received from any other electrical or electronic component (see Fig. 1).

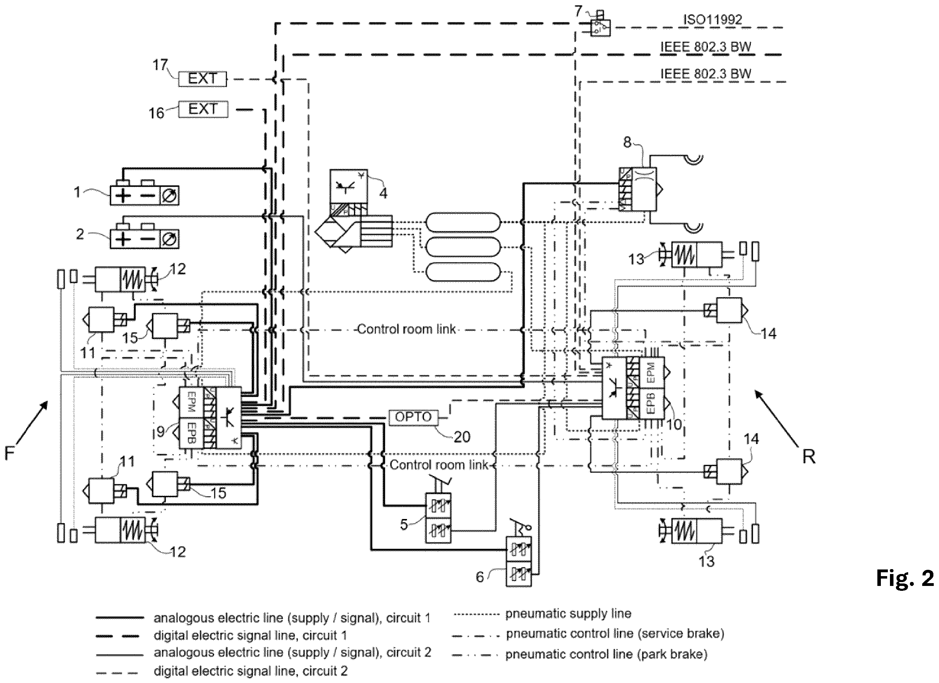

Unless otherwise stated or otherwise shown in the drawings, the preceding explanations for Fig. 1 substantially apply mutatis-mutandis also to Figs. 2 to 6, wherein the same reference numerals are utilized to designate the same or corresponding features.

Generally, a steer-by-brake functionality is supported by the redundant axle module 9, 10. Moreover, adding two more PCVs (pressure control modules) to the spring/parking brake actuators/chambers on all steered axles enables an integration of a steer-by-brake functionality into the electronic parking brake module as well. In this respect, Fig. 2 shows an embodiment in which PCV valves 15 are applied to the spring brake / parking brake actuators/chambers 12 on the steered axle, in this example on the front axle F. Thereby, a steer-by-brake functionality is ensured by the electronic parking brake (EPB). Accordingly, Fig. 2 shows redundant axle modules 9, 10 on a two-axle vehicle with PCV valves 15 for the spring brake actuators on the front axle F.

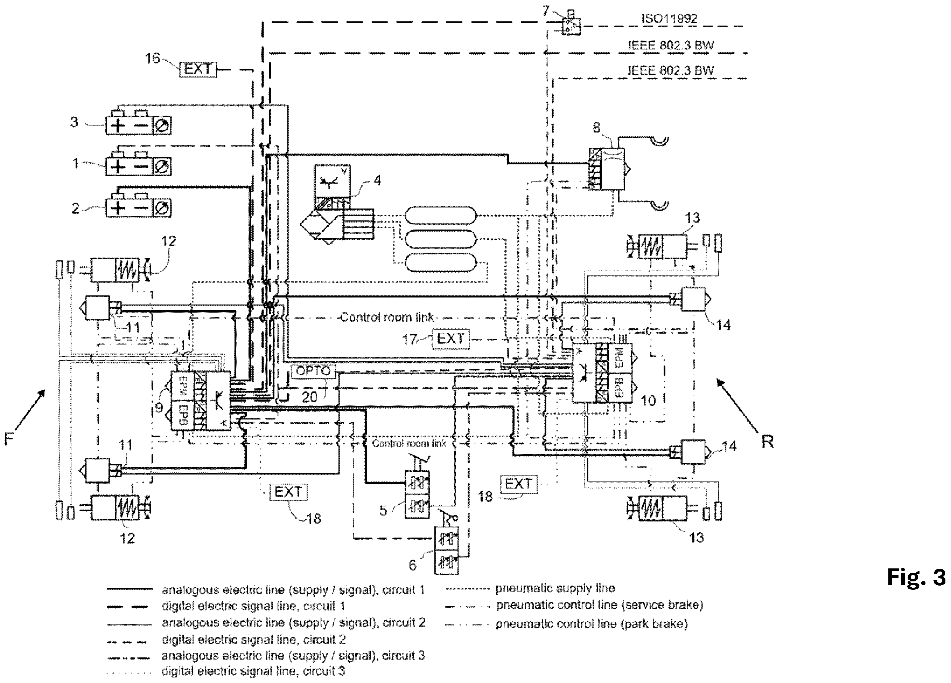

Referring to Fig. 3, adding an independent electrical power supply 1 for the electronic parking brake (EPB) channels inside the redundant axle modulators 9, 10 will result in a three-circuit redundant electro-pneumatic brake system. In this respect, the redundant brake system shown in Fig. 3 comprises a first electric power supply device 2 for the redundant axle module 9, i.e. the first brake circuit, a second electric power supply device 3 for the redundant axle module 10, i.e. the second brake circuit, and an additional, independent electric power supply device 1 for the EPB channels inside the two redundant axle modulators 9, 10, i.e. a third brake circuit. Herein, an input brake demand signal may be generated redundantly as well, see e.g. the parking brake hand control unit (HCU) 6 which is connected to the redundant axle module 9 by an electric signal line of the third brake circuit, as shown in Fig. 3.

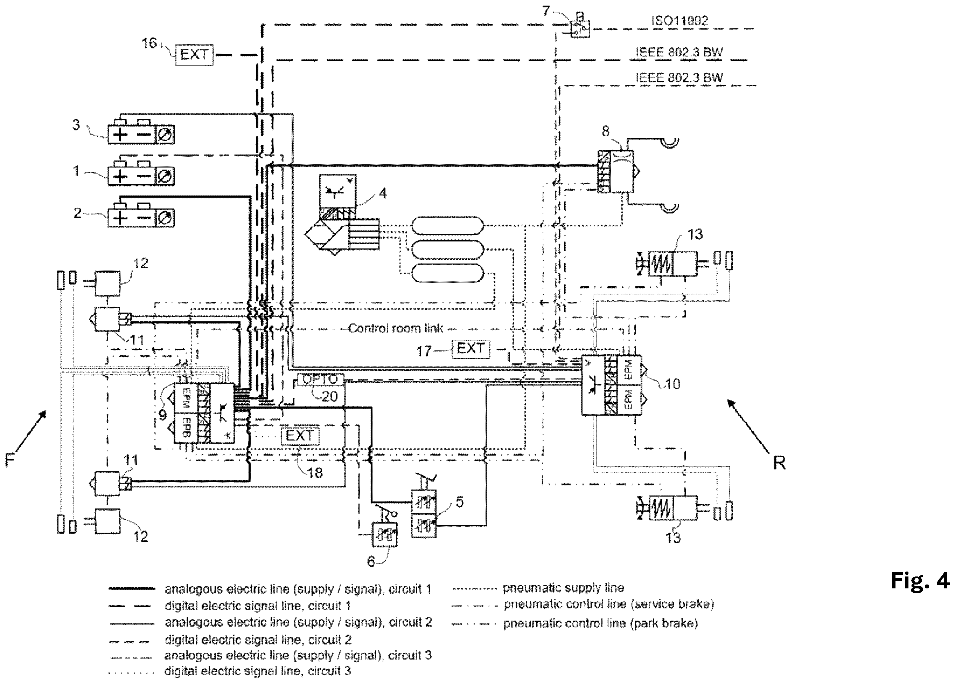

Referring to Fig. 4, to reduce system complexity and cost, a 2-channel electronic pressure modulator (EPM) 10, i.e. a non-redundant axle module, can be applied to the rear axle R, whereas a redundant axle module 9 is applied only on the front axle F. This allows to neglect the PCV valves 14 (which are shown in the embodiments of Figs. 1, 2 and 3) from the rear axle R, since the 2-channel EPM 10 can control the service brake actuators 13 on the rear axle R independently. The spring brake actuators 13 on the rear axle R can be controlled by the EPB channel of the front redundant axle module 9 (see Fig. 4).

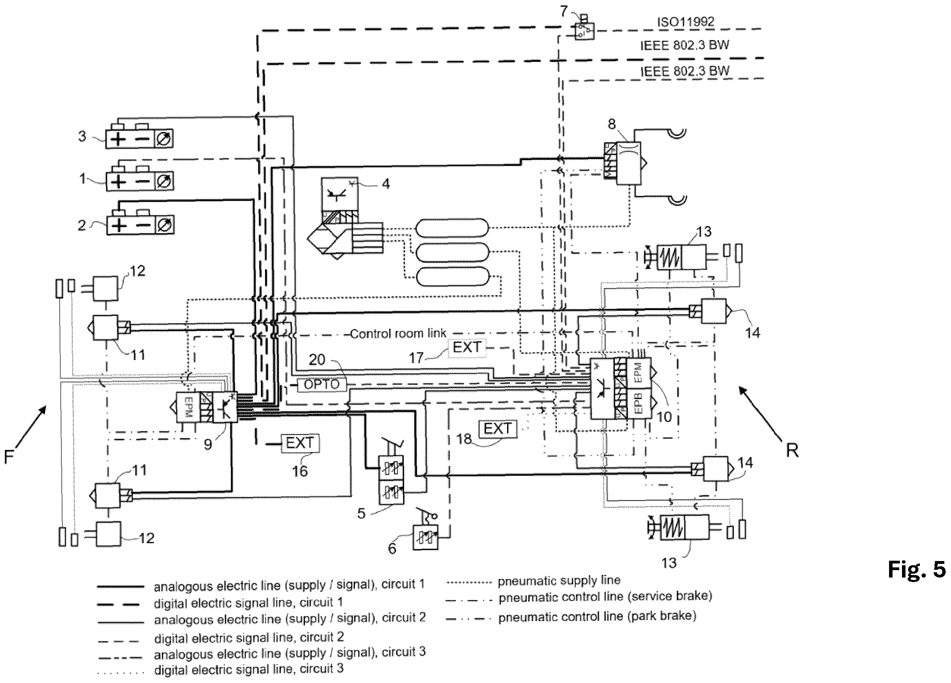

A further cost reduction can be achieved using a single channel (1-channel) EPM 9, i.e. a non-redundant axle module, on the front axle F with an integrated brake control ECU and a redundant axle module (EPB and EPM) 10 on the rear axle R, as shown in Fig. 5. Herein, pressure control valves (PCVs) 11 can be arranged sidewise for every single brake actuator 12 on the front axle F which is equipped with the 1-channel pressure modulator (EPM) 9.

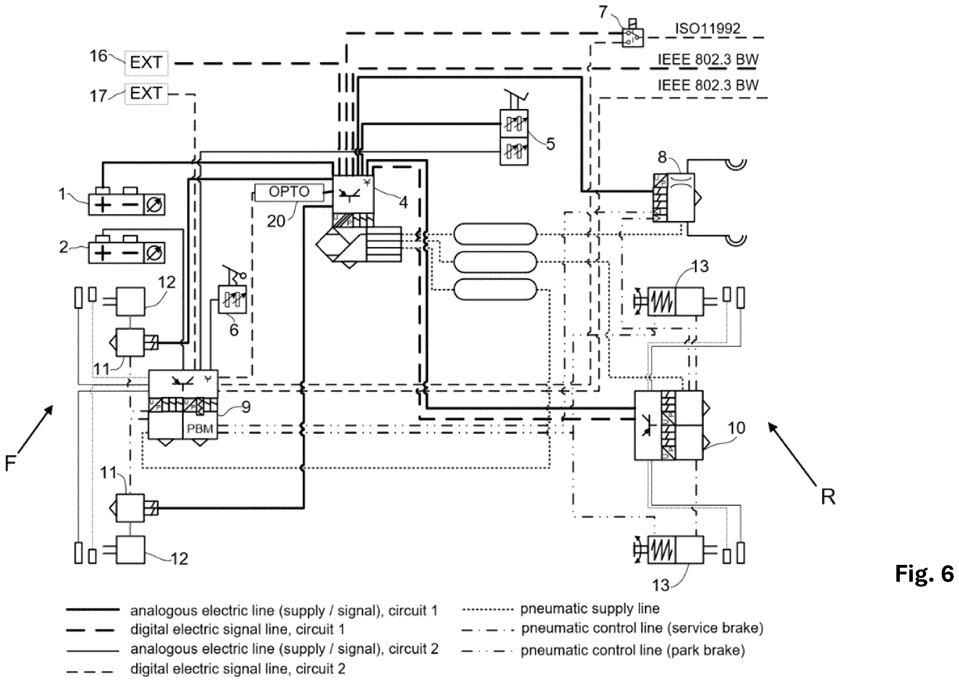

A further alternative solution, which is substantially based on Fig. 4, is shown in Fig. 6. Herein, the primary brake control of the brake circuits which are not equipped with a redundant axle modulator 9, 10 is integrated into the air treatment unit 4 (which supplies pressurized air by pneumatic supply lines to the concerned components of the brake system, as shown in all drawings). Front axle module 9 comprises a parking brake modulator (PBM) as one channel.

### LIST OF REFERENCE SIGNS

- 1: electric power supply
- 2: electric power supply
- 3: electric power supply
- 4: air supply/treatment unit
- 5: foot brake sensor (FBS)
- 6: hand control unit (HCU) for parking brake
- 7: communication with trailer
- 8: trailer control module
- 9: redundant axle module for front axle
- 10: redundant axle module for rear axle
- 11: pressure control module/valve (PCV)
- 12: front service brake and parking brake actuator
- 13: rear service brake and parking brake actuator
- 14: pressure control module/valve (PCV)
- 15: pressure control module/valve (PCV)
- 16: electric/electronic components for generating electrical brake demands
- 17: electric/electronic components for generating electrical brake demands
- 18: electric/electronic components for generating electrical brake demands
- 20: communication line
- F: front axle of vehicle
- R: rear axle of vehicle

## Claims

1. Brake system for a commercial vehicle, wherein the commercial vehicle comprises at least one front axle (F) and at least one rear axle (R), **characterized by** a redundant electro-pneumatic service brake system and an electro-pneumatic parking brake system, wherein at least one axle (F, R) of the vehicle is equipped with an electro-pneumatic device (9, 10) which comprises redundant electric and/or electronic devices which are configured to control two independent electro-pneumatic circuits.

2. Brake system according to claim 1, **characterized in that** at least one axle (F, R) of the vehicle is equipped with a 2-channel electro-pneumatic device (9, 10) having redundant electric and/or electronic devices, which is configured to control two independent pneumatic circuits, wherein one of the two pneumatic circuits is configured to control one or more service brake actuators (12, 13) which are associated with at least one axle (F, R) of the vehicle, and wherein the other of the two pneumatic circuits is configured to control one or more parking brake actuators (12, 13) which are associated with at least one axle (F, R) of the vehicle.

3. Brake system according to claim 2, **characterized in that** the redundant electric and/or electronic devices of the 2-channel electro-pneumatic device (9, 10) include at least two independent electric power supplies (1, 2, 3).

4. Brake system according to claim 2 or claim 3, **characterized in that** the redundant electric and/or electronic devices of the 2-channel electro-pneumatic device (9, 10) include an electric controller device which is configured to receive electrical control demand signals as service brake demands and/or as parking brake demands.

5. Brake system according to any one of claims 2 to 4, **characterized in that** the 2-channel electro-pneumatic device comprises a redundant axle module (9, 10) which comprises a 1-channel electro-pneumatic modulator (EPM) and a 1-channel electronic parking brake module (EPB) forming an integrated redundant electronic service brake control unit and an integrated electronic parking brake control unit.

6. Brake system according to claim 5, **characterized in that** at least one axle (F, R) of the vehicle is equipped with a redundant axle module and the other axle(s) (F, R) of the vehicle are equipped with non-redundant axle module(s).

7. Brake system according to claim 5 or claim 6, **characterized in that**, if at least one axle (F, R) of the vehicle is equipped with a redundant axle module, at least one other axle (F, R) of the vehicle is equipped with a 1-channel electro-pneumatic modulator (EPM).

8. Brake system according to claim 7, **characterized in that** pressure control valves (11) are arranged sidewise for every single brake actuator (12) on the axle (F, R) which is equipped with the 1-channel pressure modulator (EPM).

9. Brake system according to claim 1, **characterized in that** at least one axle (F, R) of the vehicle is equipped with a 2-channel electro-pneumatic device having non-redundant electric and/or electronic devices, which is configured to control two independent pneumatic circuits, wherein one of the two pneumatic circuits is configured to control one or more service brake actuators (12, 13) which are associated with at least one axle (F, R) of the vehicle, and wherein the other of the two pneumatic circuit is configured to control one or more parking brake actuators (12, 13) which are associated with at least one axle (F, R) of the vehicle.

10. Brake system according to claim 9, **characterized in that** the electronic parking brake control is assigned in purely electric manner to the axle modules.

11. Brake system according to claim 9, **characterized in that** a pressure control valve (15) is arranged sidewise to at least one service brake actuator (12).

12. Brake system according to claim 2, **characterized in that**, if 2-channel electro-pneumatic devices, particularly redundant axle modules (9, 10), respectively are arranged on multiple axles (F, R) of the vehicle and respectively have independent electric power supplies (1, 2, 3), the parking brake system also has further independent power supply circuits.

13. Brake system according to claim 12, **characterized in that** for the multi-channel parking brake system the input brake demand signal is generated redundantly as well.

14. Brake system according to claim 1, **characterized in that** the electronic pressure modulators fitted to opposite axles to axle modules the pneumatically separated service brake circuits (front, rear) are equipped with electrically independent power supplies (2 and 3).

15. Brake system according to claim 5, **characterized in that** the brake control of the brake circuits which are not equipped with a redundant axle modulator (9, 10) is integrated into an air treatment unit (4).
